# FASCICULE DE BREVET EUROPEEN

(11) **EP 0 527 694 B1**
(45) Date de publication et mention de la délivrance du brevet: **28.06.1995**
(21) Numéro de dépôt: 92420273.2
(22) Date de dépôt: 11.08.1992
(51) Int. Cl.: H01R 43/02, H01H 1/58, B23K 11/00

(54) **Procédé de fabrication de tresses conductrices pour appareillages électro-mécaniques et dispositif de mise en oeuvre**
Verfahren für die Herstellung von Leitungslitzen für die elektromechanische Gerätetechnik und Vorrichtung für die Ausführung des Verfahrens
Procedure for the fabrication of braid conductors for electro-mechanical apparatus and disposition for their fabrication

(30) Priorité: 12.08.1991 FR 9110385
(43) Date de publication de la demande: 17.02.1993
(73) Titulaire: TECHNAX, 69740 Genas (FR)
(72) Inventeur: Saunier, Claude, F-69740 Genas (FR); Levert, Gérard, F-69330 Meyzieu (FR)
(74) Mandataire: Maureau, Philippe

(56) Documents cités:
- DE-A- 3 437 749
- DE-U- 9 107 140
- FR-A- 2 336 817

## Description

La présente invention, concerne un procédé de fabrication de tresses conductrices pour appareillages électro-mécaniques et un dispositif pour sa mise en oeuvre.

La fabrication de certains appareils électro-mécaniques comportant des pièces conductrices mobiles les unes par rapport aux autres, et notamment de disjoncteurs, implique de relier les pièces conductrices par des éléments conducteurs souples constitués par des tresses de fils de cuivre.

Les extrémités de ces tresses sont soudées sur les pièces conductrices par résistance, c'est-à-dire en faisant passer un courant électrique au travers des parties à souder, au moyen d'électrodes en contact avec elles.

Pour que les opérations de soudage s'effectuent correctement, les fils de cuivre torsadés constituant la tresse doivent avoir été préalablement fusionnés les uns aux autres aux extrémités de la tresse et ces dernières doivent avoir été mises en forme après cette fusion afin d'avoir une section transversale sensiblement carrée et constante.

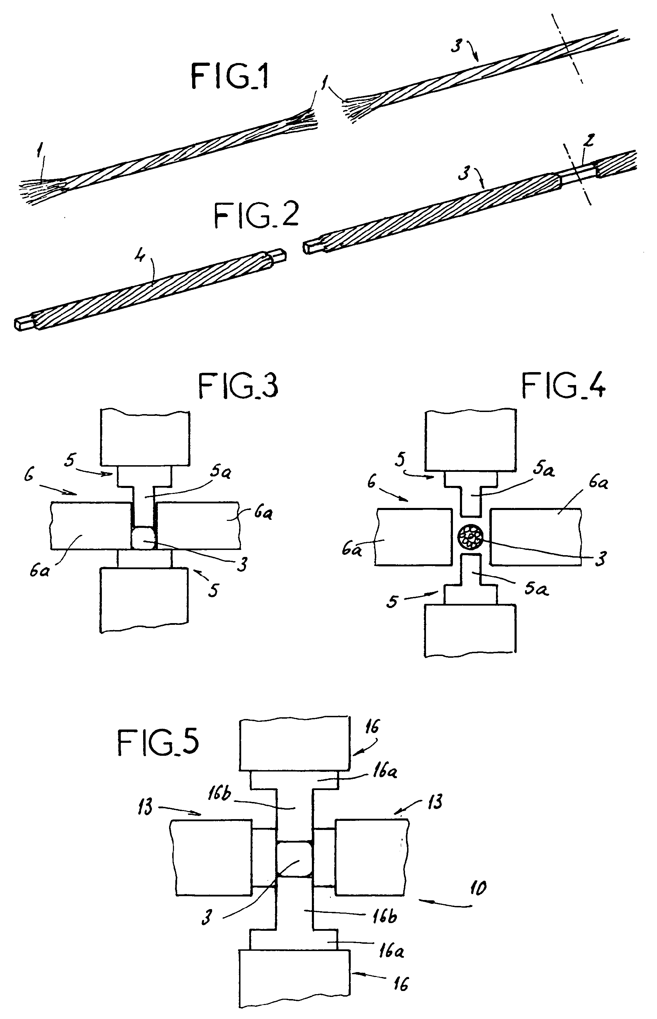

En effet, à défaut d'opérer une telle fusion, les fils de cuivre ont tendance, ainsi que le montre la figure 1 du dessin annexé, à s'écarter les uns des autres et à former une touffe 1 plus ou moins évasée, qui présente une résistance insuffisante pour qu'une fusion du métal se produise lors du soudage. La mise en forme des parties fusionnées des tresses permet d'obtenir des paramètres de soudage qui restent constants d'une tresse à l'autre et, donc, de réaliser les opérations de soudage de manière automatisée.

En pratique, les tresses sont fabriquées à partir d'un câble de fils de cuivre torsadé. Comme cela apparaît sur la figure 2, les fils sont fusionnés dans des portions 2 régulièrement espacées sur le câble 3 de la longueur voulue pour les tresses 4, cette fusion se réalisant selon une technique similaire à celle du soudage électrique par résistance, c'est-à-dire au moyen du passage à travers les fils, transversalement à l'axe du câble 3, d'un courant électrique traversant des électrodes en contact avec le câble 3. Les portions 2 de fils fusionnés, plus ou moins écrasées par les électrodes lors de l'opération de fusion, sont ensuite mises en forme par des moyens mécaniques appropriés, tels que des presses, puis le câble 3 est coupé au niveau de la partie médiane de chaque portion 2 de fils fusionnés pour l'obtention de tresses 4.

L'opération de mise en forme des portions de fils fusionnés présente l'inconvénient d'augmenter le prix de revient des tresses et leur temps de fabrication. De plus et surtout, la fusion des fils provoque une diminution de la section du câble et, donc, son allongement, ce qui rend difficile la réalisation de l'opération de mise en forme des portions de fils fusionnés par une machine automatique fonctionnant de manière coordonnée à celle réalisant l'opération de fusion.

Pour remédier à cet inconvénient, il est connu de réaliser simultanément les opérations de fusion et de mise en forme du câble 3. Pour ce faire, comme le montrent les figures 3 et 4 du dessin annexé, on emploie soit une, soit deux électrodes 5 présentant une extrémité 5a de même épaisseur que celle que doivent avoir, après fusion des fils, lesdites portions 2 du câble 3 et une mâchoire 6 en matériau isolant dont les mors 6a sont disposés perpendiculairement aux électrodes 5. Dans un premier temps, on pince le câble 3 entre les électrodes 5 de telle manière que les faces de ces dernières qui sont en contact avec le câble 3 soient à une distance l'une de l'autre qui correspond sensiblement à l'épaisseur que doivent avoir, après fusion des fils, lesdites portions 2 du câble 3. On serre ensuite le câble 3 ainsi que les extrémités amincies 5a des électrodes 5 entre les mors 6a de la mâchoire 6. Les faces des électrodes 5 et des mors 6a en contact avec le câble 3 délimitent ainsi entre elles la forme que doivent avoir, après fusion, les portions 2 de câble 3 dans lesquelles les fils doivent être fusionnés, de telle sorte qu'au cours de l'opération de fusion des fils, lesdites portions du câble 3 prennent la forme désirée.

Cette technique présente toutefois un inconvénient important : du fait de leur faible épaisseur, les parties 5a des électrodes 5 s'échauffent de manière importante lorsqu'elles sont traversées par le courant électrique, ce qui conduit à l'usure rapide des électrodes 5 et à la nécessité de les changer fréquemment. Il en résulte que le coût des électrodes 5 greve notablement le prix de revient des tresses 4.

La présente invention vise à remédier à ces inconvénients.

Le procédé qu'elle concerne est du type consistant à pincer un câble de fils de cuivre torsadé entre deux électrodes et entre les mors d'une mâchoire en matériau isolant pinçant le câble perpendiculairement aux électrodes, à prévoir lesdits électrodes et mors de manière à ce que leurs faces en contact avec le câble délimitent entre elles la forme que doit acquérir après fusion des fils la portion de câble pincée, à réaliser la fusion des fils de cuivre de la portion de câble pincée par passage d'un courant électrique entre les électrodes, à répéter ces opérations sur des portions de câble régulièrement espacées entre elles de la longueur voulue pour les tresses et à couper le câble au niveau de la partie médiane de chaque portion de fils fusionnés.

Selon l'invention, le câble est tout d'abord pincé entre les mors de la mâchoire, qui présentent chacun une extrémité ayant une épaisseur sensiblement égale à celle que doivent avoir, après fusion des fils, lesdites portions du câble puis le câble ainsi que lesdites extrémités des mors sont pincés et serrés entre les deux électrodes.

Ainsi, par rapport à la technique antérieure, les électrodes ne possèdent pas d'extrémités amincies qui s'échauffent lors du passage à travers elles du courant électrique mais ont, au contraire, une section transversale relativement importante pour pincer tant le câble que les extrémités amincies des mors de la mâchoire, qui pincent elles-mêmes le câble. L'échauffement des électrodes est, donc, peu important et les électrodes employées selon l'invention ont une longévité bien supérieure à celle des électrodes présentant une extrémité amincie venant pincer le câble.

L'invention concerne également un dispositif mettant en oeuvre ce procédé.

Les mors de la mâchoire que comprend ce dispositif présentent chacun une extrémité ayant une épaisseur sensiblement égale à celle que doivent avoir, après fusion des fils de cuivre, les portions du câble dans lesquelles les fils doivent être fusionnés et les électrodes ont une section transversale telle qu'elle leur permet de pincer et de serrer entre elles tant le câble que lesdites extrémités des mors de la mâchoire.

De toute façon, l'invention sera bien comprise à l'aide de la description qui suit, en référence au dessin schématique annexé représentant, à titre d'exemple non limitatif, une forme d'exécution du dispositif qu'elle concerne.

Figure 5 en est une vue simplifiée de côté.

Elle représente un dispositif 10 servant à la fabrication de tresses souples conductrices 4 utilisées dans certains appareils électro-mécaniques pour relier des pièces conductrices mobiles l'une par rapport à l'autre.

Comme le montre la figure 2, les tresses 4 sont fabriquées à partir d'un câble 3 de fils de cuivre torsadés. Les fils sont fusionnés dans des portions 2 régulièrement espacées sur le câble 3 de la longueur voulue pour les tresses 4 et le câble 3 est ensuite coupé au niveau de la partie médiane de chaque portion 2 de fils fusionnés, pour l'obtention des tresses 4.

Le dispositif 10 comprend une mâchoire 16 en matériau isolant dont les mors 16a présentent chacun une extrémité amincie 16b ayant une épaisseur sensiblement égale à celle que doivent avoir, après fusion des fils de cuivre, les portions 2 du câble 3. Les mors 16a sont destinés à pincer le câble 3 et sont prévus de manière à ce qu'en position de pinçage, leurs faces en contact avec le câble 3 soient à une distance l'une de l'autre qui correspond sensiblement à l'épaisseur que doivent avoir, après fusion des fils de cuivre, les portions 2 du câble 3.

Le dispositif 10 comprend également une paire d'électrodes 13, disposées perpendiculairement à la mâchoire 16, qui ont une section transversale telle qu'elle leur permet de pincer et de serrer tant le câble 3 que les extrémités amincies 16b des mors 16a.

Ce dispositif 10 permet de réaliser la fusion des fils de cuivre du câble 3 au niveau des portions 2 de celui-ci grâce au passage à travers eux du courant électrique acheminé par les électrodes 13 et, simultanément, de mettre ces portions 2 à la forme voulue, qui correspond à la forme délimitée par les faces"des mors 16a et des électrodes 13 en contact avec le câble 3.

Dans ce dispositif 10, les électrodes 13 ont une section transversale relativement importante pour pincer tant le câble 3 que les extrémités amincies des mors 16a et donc un échauffement relativement peu important lors du soudage, qui ne nuit pas à leur longévité.

## Revendications

1. Procédé de fabrication de tresses conductrices pour appareillages électro-mécaniques, consistant à fusionner les fils de cuivre torsadés constituant un câble (3) dans des portions (2) régulièrement espacées sur le câble (3) de la longueur voulue pour les tresses (4) et à couper ensuite le câble (3) au niveau de la partie médiane de chaque portion (2) de fils fusionnés, et consistant, à pincer le câble de fils de cuivre torsadé entre deux électrodes et entre les mors d'une mâchoire en matériau isolant pinçant le câble perpendiculairement aux électrodes, à prévoir lesdits électrodes et mors de manière à ce que leurs faces en contact avec le câble délimitent entre elles la forme que doit acquérir, après fusion des fils, la portion de câble pincée, à réaliser la fusion des fils de cuivre de la portion de câble pincée par passage d'un courant électrique entre les électrodes, à répéter ces opérations sur des portions de câble régulièrement espacées entre elles de la longueur voulue pour les tresses et à couper le câble au niveau de la partie médiane de chaque portion de fils fusionnés, caractérisé en ce que le câble (3) est tout d'abord pincé entre les mors (16a) de la mâchoire (16), qui présentent chacun une extrémité (16b) ayant une épaisseur sensiblement égale à celle que doivent avoir, après fusion des fils, lesdites portions (2) du câble (3) puis le câble (3) ainsi que lesdites extrémités (16b) des mors (16a) sont pincés et serrés entre les deux électrodes (13).

2. Dispositif de mise en oeuvre du procédé selon la revendication 1, du type comportant deux électrodes et une mâchoire, aptes à pincer le câble selon deux directions perpendiculaires et dont les faces en contact avec le câble délimitent entre elles la forme que doit acquérir, après fusion des fils, les portions du câble dans lesquelles les fils doivent être fusionnés, caractérisé en ce que les mors (16a) de la mâchoire (16) présentent chacun une extrémité (16b) ayant une épaisseur sensiblement égale à celle que doivent avoir, après fusion des fils de cuivre, les portions (2) du câble (3) dans lesquelles les fils doivent être fusionnés et les électrodes (13) ont une section transversale telle qu'elle leur permet de pincer et de serrer entre elles tant le câble (3) que lesdites extrémités (16b) des mors (16a) de la mâchoire (16).

## Patentansprüche

1. Verfahren zur Herstellung von Leitungslitzen für elektromechanische Geräte, wobei die miteinander verzwirnten oder verdrillten Kupferdrähte, die ein Kabel (3) ausbilden, in Teilen oder Gebieten (2) miteinander verschmolzen werden, die in Bezug auf die gewünschte Länge der Litzen (4) über die Länge des Kabels (3) regelmäßig verteilt angeordnet sind, wobei dann das Kabel (3) im Bereich des Mittelteils jedes Gebiets (2) der verschmolzenen Drähte durchgetrennt wird, wobei das Kabel aus den verzwirnten Kupferdrähten zwischen zwei Elektroden und zwischen den Backen einer Klemmvorrichtung aus Isoliermaterial eingeklemmt wird, die das Kabel senkrecht zu den Elektroden einklemmen, wobei ferner die Elektroden und die Klemmbacken derart vorgesehen bzw. ausgebildet sind, daß ihre in Kontakt mit dem Kabel stehenden Flächen zwischen sich diejenige Form begrenzen, die nach dem Verschmelzen der Drähte das betreffende Gebiet des eingeklemmten Kabels einnehmen soll, daß das Verschmelzen der Kupferdrähte des eingeklemmten Gebiets oder Teils des Kabels durch das Hindurchleiten eines elektrischen Stroms durch die Elektroden erfolgt, daß diese Verfahrensschritte an den in Bezug auf die gewünschte Länge der Litzen regelmäßig verteilt angeordneten Gebieten des Kabels wiederholt werden, und daß das Kabel im mittleren Bereich jedes Gebiets der verschmolzenen Drähte durchtrennt wird,
**dadurch gekennzeichnet,**
daß das Kabel (3) zunächst zwischen den Backen (16a) der Klemmvorrichtung (16) eingeklemmt wird, die jeweils ein Ende (16b) haben, dessen Breite im wesentlichen gleich derjenigen Breite ist, die die Gebiete oder Teile (2) des Kabels (3) nach dem Verschmelzen der Drähte haben sollen, worauf das Kabel (3) und die Enden (16b) der Backen (16a) zwischen den beiden Elektroden (13) eingeklemmt werden.

2. Vorrichtung zur Durchführung des Verfahrens nach Patentanspruch 1 mit zwei Elektroden und mit einer Klemmvorrichtung, die das Kabel in zwei zueinander senkrecht stehenden Richtungen zwischen sich einklemmen können und deren in Kontakt mit dem Kabel stehenden Flächen zwischen sich diejenige Form begrenzen, die die betreffenden Teile oder Gebiete des Kabels, in denen die Drähte verschmolzen werden sollen, nach dem Verschmelzen der Drähte einnehmen soll,
**dadurch gekennzeichnet,**
daß die Backen (16a) der Klemmvorrichtung (16) jeweils ein Ende (16b) haben, das eine Dicke hat, die im wesentlichen gleich derjenigen Dicke ist, die, nach dem Verschmelzen der Kupferdrähte diejenigen Teile oder Gebiete (2) des Kabels (3) haben sollen, in denen die Drähte verschmolzen werden sollen, und daß die Elektroden (13) einen Querschnitt derart haben, daß zwischen ihnen sowohl das Kabel (3) wie auch die Enden (16b) der Backen (16a) der Klemmvorrichtung (16) eingeklemmt werden können.

## Claims

1. A method of manufacturing conductive braids for electromechanical apparatus, consisting of fusing the twisted together copper wires constituting a cable (3) into portions (2) of the length required for the braids (4), regularly spaced on the cable (3), and then of cutting the cable (3) in the region of the median part of each portion (2) of fused wires, and consisting of clamping the cable of twisted together copper wires between two electrodes and between the jaws of a clamp of insulating material clamping the cable perpendicularly to the electrodes, of providing the electrodes and jaws in such a way that their faces in contact with the cable delimit between them the shape which the clamped portion of cable must acquire after fusing of the wires, of carrying out the fusion of the copper wires of the clamped portion of cable by passing an electrical current between the electrodes, of repeating these operations on regularly spaced portions of cable of the required length for the braids and of cutting the cable in the region of the median part of each portion of fused wires, characterised in that the cable (3) is first of all clamped between the jaws (16a) of the clamp (16), each of which has an end (16b) having a thickness substantially equal to that which said portions (2) of the cable (3) must have after fusion of the wires, then the cable (3) as well as said ends (16b) of the jaws (16a) are clamped and gripped between the two electrodes (13).

2. A device for carrying out the method of Claim 1, of the type having two electrodes and a clamp, adapted to clamp the cable in two perpendicular directions and of which the faces in contact with the cable delimit between them the shape which, after fusion of the wires, the portions of the cable into which the wires are to be fused must have, characterised in that the jaws (1 6a) of the clamp (16) each have one end (16b) having a thickness substantially equal to that which, after fusion of the copper wires, the portions (2) of the cable (3) into which the wires are to be fused must have, and the electrodes (13) have a transverse section such that it permits them to clamp and grip between them both the cable (3) and the ends (1 6b) of the jaws (1 6a) of the clamp (16).
